# EUROPEAN PATENT APPLICATION

(11) **EP 4 502 438 A1**
(43) Date of publication of application: **05.02.2025**
(21) Application number: 24175586.7
(22) Date of filing: 14.05.2024
(51) Int. Cl.: F16K 31/04, F16K 31/50, F16K 31/53, F16K 37/00

(54) **AUTOMATIC OPERATING APPARATUS OF A VALVE FOR FUEL GAS SYSTEMS**

(30) Priority: 03.08.2023 IT 202300016632
(71) Applicant: Automa S.r.l., 60131 Ancona (AN) (IT)
(72) Inventor: GIORGETTI, Giorgio, 60131 Ancona AN (IT); PUCCI, Matteo, 60124 Ancona AN (IT)
(74) Representative: De Sandre, Emanuele

(57) **Abstract**

Apparatus (10) for automatically actuating a valve for fuel gas systems, suitable for operating in environments with a high risk of explosion where the valve includes:
- a valve body that can be connected to two sections of pipe and crossed by a channel suitable for hydraulically connecting the two sections of pipe;
- a sectioning member housed in the sectioning body and operable between a closing configuration in which the channel is obstructed and an opening configuration in which it defines a maximum passage section in the channel;
- a regulating member connected to the disconnecting member and connected to the valve body by means of a threaded connection which defines an actuation axis with respect to which the regulating member can be screwed and unscrewed on the valve body to operate the disconnecting member ; the regulating member protrudes from the valve body so as to be operated to activate the sectioning member.

The operating apparatus (10) includes a motor unit (11) to operate a slider (12) which can be coupled with the valve regulating element to operate it; an actuator member (13) which can be rotated around an operating axis (A) to which the slider (12) is slidably coupled along the operating axis (A); a detection device (14) for detecting an operating position of the slider (12) along the operating axis (A) with respect to a positional reference (R) of the actuating apparatus (10).

## Description

The present invention concerns an apparatus for automatically actuating a valve for fuel gas systems, suitable for operating in environments with a high risk of explosion.

Specifically, an apparatus for automatically actuating valves suitable for being equipped on pre-existing valves of a gas distribution system is disclosed.

Operationally, with 'valve' we mean, in this text, a device capable of modulating the gas flow rate in a duct with which this valve is associated and/or regulating a pressure difference of the gas flowing through the valve itself between an upstream branch and one downstream from the latter.

Structurally, with 'valve' it is intended - in general - a device structurally configured to regulate the opening of a passage section for a gas between the upstream and downstream branches.

The present invention refers, in particular, to an actuation apparatus configured in accordance with the ATEX Directive 2014/34/EU and to satisfy the suitability requirements for operating within areas classified as ATEX 0, 1 or 2, according to Directive 99/92/EC.

Notoriously, in such areas, manually operated valves are used whose adjustment is carried out by acting on a screw whose head protrudes outside the body of the valve. There is a known prejudice to the use of electromechanical actuators due to the potential risk of ignition of gas which had dispersed into the environment hosting the system in which the valve operated by the actuator is integrated.

However, manual adjustment presupposes the movement of an operator to the place where the valve is located. For this reason, manual adjustment typically occurs only twice a year, i.e. in summer and winter, as these are the most different times with regards to the gas demand from the user.

Precisely due to the fact that manual adjustment is performed infrequently, the pressure is typically adjusted in excess of that required at the exact moment in which the adjustment is made, so as to guarantee that the pressure remains above the desired threshold even when environmental conditions change. However, greater pressure necessarily leads to greater losses along the gas distribution line, to the detriment of the efficiency of the distribution system.

In order to overcome the imprecision and inefficiency of a manual actuation of such valves, in the patent document EP2818961, in the name of the same applicant, an actuation apparatus is disclosed which includes a coupling member having a shaped seat suitable for coupling smoothly with the head of a valve screw.

The operation of this apparatus involves an adjustment of the valve by rotating the coupling member which causes the screw whose head slides reversibly in the shaped seat to be tightened or unscrewed.

This apparatus is thus easily applicable to pre-existing systems without significant modifications to them. Furthermore, it is equipped with a motor that drives the rotation of the coupling member suitable for operating in areas classified as ATEX 1 or ATEX 2 at risk of explosion.

As much as this apparatus is appreciated, it has proven to be perfectible.

In particular, the present applicant has noted the need to avoid calibration or adjustments of the apparatus and/or valve to guarantee precise adjustment and long-lasting reliability.

Furthermore, he identified the need for precise and reliable automatic control of the valve opening condition.

There is also a felt need to make available a regulation system that can also operate in ATEX 0 classified areas.

The problem underlying the present invention is especially that of satisfying these needs.

The task of the present invention is therefore to make available an apparatus for automatically actuating a valve for fuel gas systems, suitable for operating in environments with a high risk of explosion which prevents or limits the need for calibration of the same or of the valve to which in use is coupled and which guarantees long-lasting reliability of the valve adjustment precision as well as its control.

Within the scope of this task, an object of the present invention is to propose an apparatus for automatically actuating a valve for fuel gas systems, suitable for operating in environments with a high risk of explosion which allows the automatic detection of at least one of a condition of complete opening and a condition of complete closure of the valve.

Another object of the present invention is to make available an apparatus for automatically actuating a valve for fuel gas systems, suitable for operating in environments with a high risk of explosion which allows the precise detection of a partial opening condition which defines partialisation of the passage section for the gas intermediate between one corresponding to the completely open condition and one corresponding to the completely closed condition.

Another object of the present invention is to propose an apparatus for automatically actuating a valve for fuel gas systems, suitable for operating in environments with a high risk of explosion which allows the degree of opening or closing to be adjusted with precision and long-lasting reliability of said valves. This task, as well as these and other purposes which will appear better below, are achieved by an apparatus for automatically actuating a valve for fuel gas systems, suitable for operating in environments with a high risk of explosion according to the attached independent claim.

Detailed characteristics of an apparatus for automatically actuating a valve for fuel gas systems, suitable for operating in environments with a high risk of explosion according to the invention are reported in the dependent claims which are incorporated herein by reference.

Further characteristics and advantages of the invention will emerge more from the description of a preferred, but not exclusive, form of embodiment of an apparatus for automatically actuating a valve for fuel gas systems, suitable for operating in environments with a high risk of explosion, according to the invention, illustrated for indicative and non-limiting purposes in the attached drawings, in which:

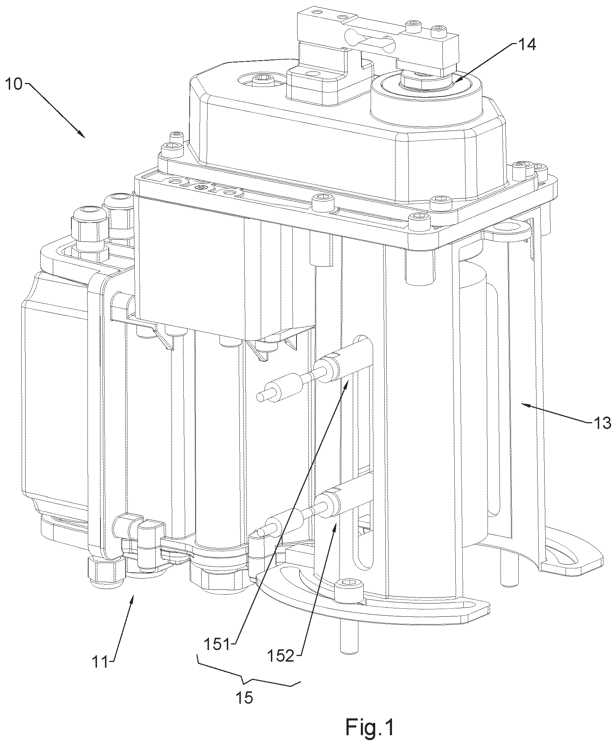

- figure 1 illustrates a simplified diagram of the apparatus for automatically actuating a valve for fuel gas systems, suitable for operating in environments with a high risk of explosion, according to the present invention, in perspective view;
- figure 2 illustrates a diagram of the actuating apparatus of figure 1 with some parts removed to better highlight others, according to the present invention;
- figure 3 illustrates a schematic view of a section of the actuating apparatus of figure 2;
- figure 4 illustrates a diagram of the actuating apparatus of figure 1 with some parts removed and partially sectioned to better highlight others, according to the present invention;
- figure 5 illustrates a simplified diagram of a detail of the actuating apparatus according to the present invention.

With particular reference to the figures cited, the number 10 globally indicates an apparatus for automatically actuating a valve for fuel gas systems, suitable for operating in environments with a high risk of explosion.

In a manner known per se and not illustrated, a valve on which the actuating apparatus 10 can be installed comprises:
- a valve body that can be connected - in a sealed manner - to two sections of a pipe; the valve body is crossed by a channel designed to hydraulically connect the two sections of the pipe for the passage of gas from one to the other, through the channel;
- a sectioning member housed in a sectioning body and operable between a closing configuration in which the channel is obstructed and an opening configuration in which it defines a maximum passage section in the channel;
- a regulating member connected to the sectioning member and connected to the valve body by means of a threaded connection which defines an actuation axis with respect to which the regulating member can be screwed and unscrewed on the valve body to operate the sectioning member.

The regulating member projects from the valve body so as to be operated to operate the sectioning member and is generally equipped with a coupling portion suitable for being coupled by form coupling to an actuator for moving the same regulating member with respect to the valve body.

For example, the coupling portion may consist of a head without an axisymmetric shape, such as having a polygonal shape to accommodate in a corresponding seat of an actuator according to a shape coupling, for example to a handcuff or lever for the manual actuation of the valve.

The present invention concerns an actuating apparatus, indicated with 10, which actuating apparatus 10 is configured to actuate a valve, to be understood as being of a type known in itself, wherein such valve is to be understood as not being part of the present invention.

The valve is therefore described above exclusively for the purpose of better and more clearly defining the configuration of the actuating apparatus 10 which acts on the regulating organ of the valve itself.

According to the present invention, the actuating apparatus 10 comprises:
- a motor unit 11 which can be operated remotely;
- a slider 12 configured to couple with the valve regulating member so as to rotate integrally with the latter to operate the valve;
- an actuator member 13 connected to the motor unit 11 to be operated in rotation around an operating axis A.

The actuator member 13 and the slider 12 are configured so as to mutually couple in a sliding manner according to a direction parallel to the operating axis A and to simultaneously rotate around the latter.

In other words, the slider 12 and the actuator member 13 are formed in such a way that the slider 12 can slide in the actuator member 13 freely along the operating axis A, otherwise being prevented from rotating around the operating axis A with respect to the actuator member 13 in such a way that following a rotation of the actuator member 13 around the operating axis A, the actuator member 13 drags the slider 12 with it into rotation around the operating axis A whilst leaving it free to slide along the operating axis A.

The actuating apparatus 10, according to the present invention, also comprises a detection device 14 which is configured for detecting an operating position of the slider 12 along the operating axis A with respect to a positional reference R of the actuating apparatus 10.

For example, the operating position of the slider 12 can be detected on the basis of the stress exerted on a load cell integral with the actuator member 13 by a compression spring placed between the load cell itself and the slider 12, as in the example of the attached figures and described more fully below.

The detection device 14 comprises:
- a detector element 141 configured for emitting a signal proportional to a stress exerted on it;
- an elastic element 142 placed between the cursor 12 and the detector element 141 and configured to transmit a stress on the detector element 141 that varies depending on the operating position.

The functioning of the detection device 14, in general, provides that when the slider 12 moves away from the detection element 141, the latter signals a reduction in the stress exerted on it by the elastic element 142.

In the particularly simple structural implementation, exemplified in the attached figures, the detector element 141 in particular can be constituted by a load cell and can have a flange or a shoulder that defines the positional reference R.

For structural simplicity, the detector element 141 can be aligned with the slider 12 along the operating axis A.

The slider 12 can comprise a stem 121 and a slide element 122 which can be simply fixed to one end of the stem 121 or integral with the latter.

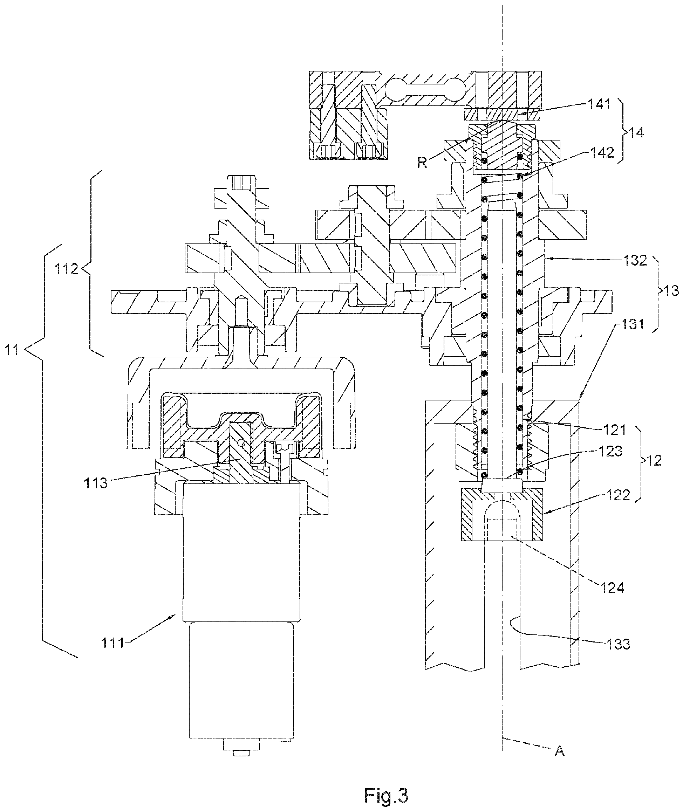

The elastic element 142 can comprise a compression spring, exemplified in figure 3, which contacts the detector element 141 to exert an increasing stress on the latter as the operating distance decreases and on a shoulder 123 of the slider 12.

The stem 121 can be inserted through the elastic element 142 as shown in figure 3 for mutual guidance and alignment, so as to guarantee high functionality efficiency.

In this particularly compact embodiment of the actuating apparatus 10, the motor unit 11 can include a motor 111 and a transmission device 112.

The motor 111 is preferably an electric motor and the transmission device 112 can comprise or consist of a gear motor and/or a mechanical transmission which, in general, is configured to transmit a rotation of a shaft 113 of the motor 111 to the actuator member 13, preferably along parallel rotation axes.

The actuator member 13 can comprise:
- an operating body 131, for example tubular as better described below;
- a containment portion 132, fixed or integral with the operating body 131 and which preferably forms a tubular sleeve in which the stem 121 and the elastic element 142 can be housed, preferably according to a mutually coaxial positioning to allow a particularly solid and compact structure of the actuating apparatus 10.

The actuator member 13 generally includes a guide element 133.

The latter and the slider 12 are configured to mutually couple so that the slider 12 slides along the guide element 133.

The latter extends in a direction that has at least one component parallel to the operating axis A to allow a movement of the slider 12 along the operating axis A, following a rotation of the actuator member 13 around the latter, i.e. around the operating axis A.

The actuator member 13 is glass-shaped.

Generally speaking, the guide element 133 can be a slot made through a wall of the glass-shaped actuator member 13.

The guide element 133 can extend parallel to the operating axis A or according to a trajectory having only a component parallel to the operating axis A, for example helical, and developing around the operating axis A itself, depending on the contingent needs of implementing the present invention.

The actuator member 13 can have a tubular shape, for example like that illustrated in the attached figures and which can extend coaxially to the operating axis A.

The guide element 133, as mentioned above, can include or consist of a slot that extends on the actuator member 13 in a direction parallel to the operating axis A so as to expose the slider 12 to the outside of the actuator member 13. The slider 12 can be connected to the guide element 133 by means of a form coupling, and can pass through the wall of the actuator member 13 or can be completely contained therein, for example in the case, not illustrated, in which the guide element comprises a curb which projects internally to the actuator member and is slidably coupled to the slider to guide its movement along the operating axis A.

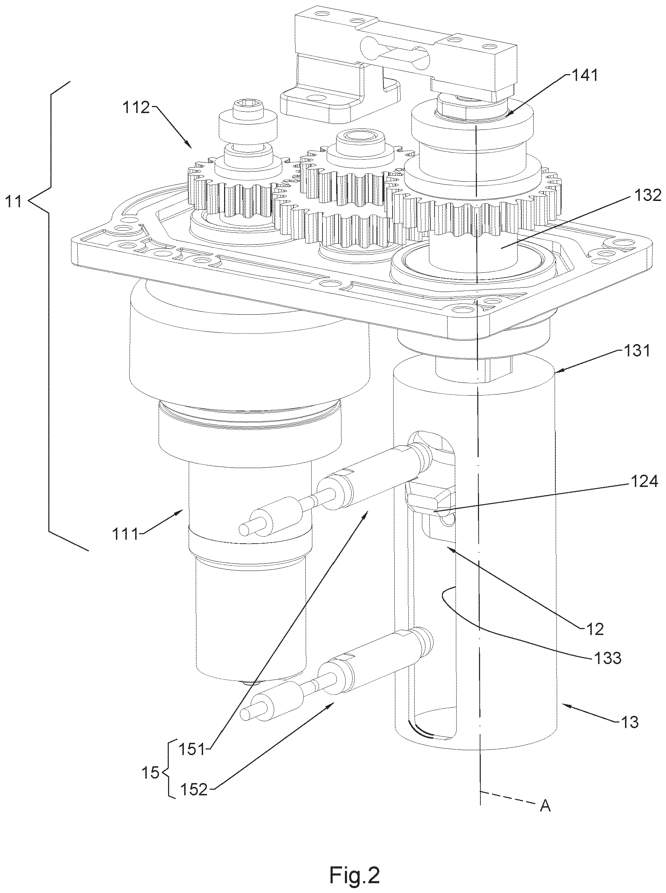

The actuating apparatus 10 can also be equipped with a sensor unit 15 which comprises a first sensor 151 facing the actuator member 13 and configured to emit a signal following positioning in a first activation position by the slider 12, along the operating axis A, which - for example - could be the one illustrated in figures 2 and 3.

The sensor group 15 can also comprise a second sensor 152 facing the actuator member 13 and configured to emit a signal following the slider 12 reaching a second activation position along the operating axis A.

The first sensor 151 and the second sensor 152 are preferably positioned, or positionable, along a direction parallel to the operating axis A such that, following the installation of the actuating apparatus 10 on a valve with the slider 12 coupled to the valve regulating member, during the activation of the actuator member 13, the first position of the slider 12 corresponds to the opening configuration of the valve sectioning member and the second position of the actuator member 13 corresponds to the closing configuration of the same sectioning member.

In this way, the first sensor 151 and the second sensor 152 emit a signal respectively when the valve is completely opened and when the valve is completely closed.

Evidently, depending on the contingent needs of implementing the present invention, further sensors can be provided, and/or the first sensor and/or the second sensor can be positioned to detect different configurations of the valve that the actuating apparatus 10 controls.

In general, said sensors can be contact sensors, i.e. such as to emit a signal when they come into contact with the slider or when they are moved by it, or they could be sensors suitable for detecting the position of the slider through the actuator member 13, for example example through a magnetic interaction with the slider where the actuator member is magnetically inactive or magnetically reactive so as not to provide false signals to the sensors.

In the embodiment exemplified in the figures attached for non-limiting purposes, the slider 12 has a protuberance 124 configured for coupling to the guide element 133, for example by crossing the slot that forms it, to face the outside of the actuator member 13.

The first sensor 151, and the second sensor 152 if provided, can have a head capable of coming into contact with the protuberance 124 in the first position, and in the second position if provided, to cause the emission of said signal by the first sensor 151, and of the second sensor 152 if provided.

In this way the actuating apparatus 10, equipped with a controller, not shown, connected to the detection device 14 and to the sensor unit 15, if provided, can accurately and autonomously detect the degree of partialization of the valve during its actuation, allowing long-lasting and reliable remote control of the same valve.

To ensure a high degree of efficiency of the actuating apparatus 10, the protuberance 124 and/or the first sensor 151, and the second sensor 152 if provided, can have dimensions such as to ensure their mutual contact, depending on the connection pitch threaded, following a 360° rotation of the actuator member 13 around the operating axis A in which the first sensor 151 is in the first position, or the second sensor 152 is in the second position if provided.

Constructive variants can include a plurality of protuberances 124 and, correspondingly, an equal number of guide elements 133 will be provided on the actuator member 13.

The protuberances 124 and the guide elements 133 can be arranged in regular angular steps around the operating axis A.

For example, in an embodiment which constitutes an excellent compromise between structural simplicity and adjustment sensitivity, two or three protuberances 124 can be provided, respectively at 180° or 120° from each other around the operating axis A, and as many guide elements 133 at the same angles.

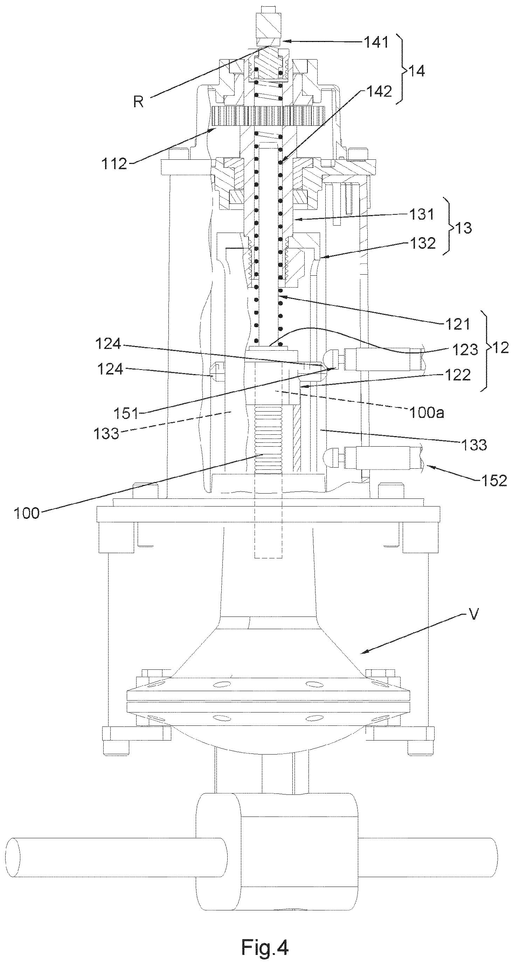

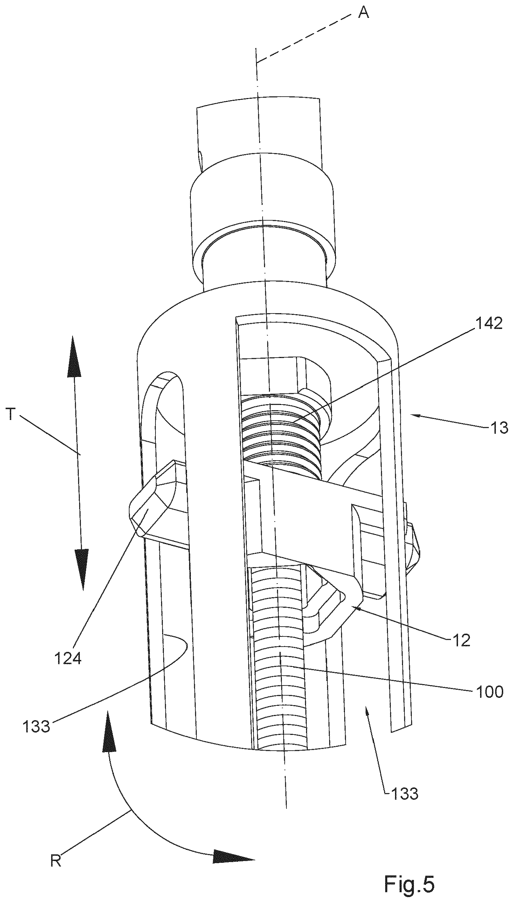

In figure 4 and figure 5, an actuation apparatus 10 associated with a valve V and, in particular, with an actuation screw 100 of the valve V is illustrated by way of example and without limitation.

The screw 100, which is part of the valve V which is understood to be known in itself, is not intended to be part of the invention.

This screw 100 is described here to better explain and clarify the configuration and operation of the actuating apparatus 10 according to the present invention. The screw 100 has an end 100a coupled to the slider 12 so that a rotation of the latter, activated by the rotation R of the actuator member 13, determines a screwing or unscrewing of the screw 100 and, therefore, a rotation of the slider 12 (integral to the actuator member 13), and a translation T of the slider 12 which can be parallel to the operating axis A.

It is therefore clear how the implementation of the present invention allows us to avoid calibration or adjustments of the actuating apparatus and/or the valve on which it is installed to guarantee precise adjustment and long-lasting reliability. This actuating apparatus allows precise and reliable automatic control of the opening condition of the valve, and prevents, or significantly limits, the need for calibration of the same or of the valve to which it is coupled in use, while guaranteeing long-lasting reliability of the precision of regulation of the valve as well as remote control of the same.

An apparatus for automatically actuating a valve for fuel gas systems, suitable for operating in environments with a high risk of explosion according to the present invention, also allows the automatic detection of at least one of a completely open condition and a completely closed condition of the valve and/or to accurately detect a partial opening condition which defines a partialization of the gas passage section, intermediate between that of complete opening and that of complete closure.

An apparatus for automatically actuating a valve for fuel gas systems, suitable for operating in environments with a high risk of explosion according to the present invention, also allows the degree of opening or closing of the valve on which to be regulated with precision and long-lasting reliability is installed without the use of specialized personnel.

The invention thus conceived is susceptible to numerous modifications and variations, all of which fall within the scope of protection of the attached claims. Furthermore, all details may be replaced by other technically equivalent elements.

In practice, the materials used, as well as the contingent shapes and dimensions, can be varied depending on the contingent needs and the state of the art.

Where the construction characteristics and techniques mentioned in the following claims are followed by signs or reference numbers, such signs or reference numbers have been affixed with the sole purpose of increasing the intelligibility of the claims themselves and, consequently, they do not constitute no limitation whatsoever on the interpretation of each element identified, purely by way of example, by such signs or reference numbers.

## Claims

1. Apparatus (10) for automatically actuating a valve for fuel gas systems, suitable for operating in environments with a high risk of explosion, where the valve includes:
- a valve body that can be connected to two sections of a pipe and crossed by a channel suitable for hydraulically connecting the two sections of the pipe;
- a sectioning member housed in a sectioning body and operable between a closing configuration in which the channel is obstructed and an opening configuration in which it defines a maximum passage section in the channel;
- a regulating member connected to the sectioning member and connected to the valve body by means of a threaded connection which defines an actuation axis with respect to which the regulating member can be screwed and unscrewed on the valve body to operate the disconnecting member; the regulating member projects from the valve body so as to be operated to activate the sectioning member;
where said actuating apparatus (10) comprises:
- a motor unit (11) that can be operated remotely;
- a slider (12) configured to couple with the valve adjustment member so as to rotate integrally with the latter to operate the valve;
- an actuator member (13) connected to the motor unit (11) to be operated in rotation around an operating axis (A),
wherein the actuator member (13) and the slider (12) are configured so as to mutually couple in a sliding manner according to a direction parallel to said operating axis (A) and to simultaneously rotate around the latter;
said actuating apparatus (10) comprising a detection device (14) configured for detecting an operating position of the slider (12) along said operating axis (A) with respect to a positional reference (R) of said actuating apparatus (10).

2. Actuating apparatus (10) according to claim 1 wherein said detection device (14) comprises:
- a detector element (141) configured for emitting a signal proportional to a stress exerted on it;
- an elastic element (142) placed between the slider (12) and the detector element (141) and configured to transmit to the detector element (141) a stress that varies depending on said operating position.

3. Actuating apparatus (10) according to the previous claim wherein the detector element (141) is aligned with the slider (12) along the operating axis (A) and the elastic element (142) comprises a compression spring which rests on the detector element (141) to exert on the latter an increasing stress as said operating distance decreases.

4. Actuating apparatus (10) according to one of the previous claims in which the actuator member (13) comprises a guide element (133); the latter and the slider (12) are configured to couple mutually so that the slider (12) slides along the guide element (133) which extends at least in a direction parallel to the operating axis (A) to allow a movement of the slider (12) along the operating axis (A) following a rotation of the actuator member (13) around the latter.

5. Actuating apparatus (10) according to the previous claim in which the actuator member (13) has a tubular shape which extends coaxially to the operating axis (A) and the guide element (133) comprises a slot extending onto the actuator member (13) in a direction parallel to the operating axis (A) so as to expose the slider (12) outside the actuator member (13).

6. Actuating apparatus (10) according to one of the previous claims which has a sensor unit (15) which includes a first sensor (151) facing said actuator member (13) and configured to emit a signal following positioning in a first position, of activation, by the slider (12) along the operating axis (A).

7. Actuating apparatus (10) according to the previous claim in which said sensor unit (15) comprises a second sensor (152) facing said actuator member (13) and configured to emit a signal following reaching a second position, of activation, by the slider (12) along the operating axis (A), wherein said first sensor (151) and the second sensor (152) are positioned, or can be positioned, along a direction parallel to said operating axis (A) in such a way that following the installation of said actuating apparatus (10) on a valve with the slider (12) coupled to the regulating member, the first position of the slider (12) corresponds to the opening configuration of the sectioning member and the second position of the actuator member (13) corresponds to the closing configuration, such that said first sensor (151) and second sensor (152) emit a signal respectively when the valve is completely opened and when the valve is completely closed.

8. Actuating apparatus (10) according to claim 5 and one of claims 6 and 7 where the slider (12) has a protuberance (124) capable of crossing said slot to face the outside of said actuator member (13); where the first sensor (151), and the second sensor (152) if provided, have a head capable of coming into contact with said protuberance (124) in said first position, and in said second position if provided, to cause the emission of said signal by the first sensor (151), and by the second sensor (152) if provided.

9. Actuating apparatus (10) according to the previous claim in which the protuberance (124) and/or the first sensor (151), and the second sensor (152) if provided, have dimensions such as to ensure their mutual contact, in function of the pitch of said threaded connection, following a 360° rotation of the actuator member (13) around the operating axis (A) in which the first sensor (151) is in the first position, or the second sensor (152) is in the second position if expected.
